# EUROPEAN PATENT APPLICATION

(11) **EP 1 921 634 A1**
(43) Date of publication of application: **14.05.2008**
(21) Application number: 06782244.5
(22) Date of filing: 03.08.2006
(51) Int. Cl.: H01B 5/14, B32B 9/00, G06F 3/041

(54) **CONDUCTIVE LAMINATE**

(30) Priority: 09.08.2005 JP 2005230566; 21.07.2006 JP 2006199792
(71) Applicant: IDEMITSU KOSAN CO., LTD., Tokyo 100-8321 (JP)
(72) Inventor: BANDO, Toru, Sodegaura-shi, Chiba 299-0293 (JP); TAKEUCHI, Mizutomo, Sodegaura-shi, Chiba 299-0293 (JP); FUKATSU, Fumioki, Sodegaura-shi, Chiba 299-0293 (JP); KOFUJI, Takeki, Tokyo 100-0006 (JP)
(74) Representative: Gille Hrabal Struck Neidlein Prop Roos
(86) International application number: PCT/JP2006/315384
(87) International publication number: WO 2007/018116

(57) **Abstract**

A conductive multilayer stack (1) including a conductive substrate (10) having an inorganic conductive layer (3); and a conductive high-molecular-weight compound layer (4) provided on the inorganic conductive layer (3). The conductive high-molecular-weight compound layer (4) may preferably be a layer obtained by forming a conductive polyaniline composition into a film; the conductive polyaniline composition including: a protonated substituted or unsubstituted polyaniline composite (a) and a compound (b) containing a phenolic hydroxyl group, dissolved in an organic solvent.

## Description

### TECHNICAL FIELD

The invention relates to a conductive multilayer stack. More particularly, the invention relates to a conductive multilayer stack in which a layer formed of a conductive high-molecular-weight polymer compound is provided on a conductive layer (transparent electrode).

### BACKGROUND

A conductive multilayer stack in which a conductive layer is formed on a transparent substrate of glass or a resin is used as a substrate for a transparent electrode for organic EL (electroluminescent) displays, solar cells, or the like.
In the conductive multilayer stack, inorganic oxides such as indium tin oxide (ITO), indium zinc oxide (IZO), zinc oxide, and tin oxide are generally used in the conductive layer.

A conductive multilayer stack in which an inorganic oxide is used as the conductive layer may suffer cracking or removal of the conductive layer by bending or for other reasons.
Since the substrate and the conductive layer have different refractive indices, the surface of a multilayer stack has a higher reflectance than that of the substrate itself. As a result, visibility or transparency of a display surface is lowered, thereby deteriorating the luminance thereof.
Further, when used in a touch panel, display light is refracted due to difference in refractive index between the substrate and the conductive layer. Therefore, the position of an object which is actually displayed may differ from the position of an object which is visibly recognized (poor visible field position accuracy), leading to occurrence of problems.

As a technology aiming at protecting a conductive layer, a transparent conductive multilayer stack in which a silicon oxide film is formed on a conductive layer is disclosed (see Patent Document 1, for example). This technology shows that alkaline resistance or moisture resistance of the conductive layer can be improved.
However, since a silicon oxide film, which is an inorganic film, is formed on a conductive layer, an effect of preventing cracking or removal of a conductive layer cannot be expected.
As other technologies aiming at protecting a conductive layer, a composite transparent conductive substrate in which a metal-based transparent conductive thin film is stacked on a substrate formed of a high-molecular-weight polymer sheet, with a conductive organic substance being further stacked thereon is disclosed (Patent Document 2). In Patent Document 2, as the conductive organic substance, conductive high-molecular-weight polymer substances such as polythiophene and polyaniline are exemplified. Further, in examples, an aqueous solution of a conductive high-molecular-weight polymer substance comprising polyethylenedioxythiophene and polysulfonic acid is applied to the surface of ITO. However, since this aqueous solution is actually a water dispersion of polythiophene, the resulting film is not sufficiently dense, and minor defects may be present. Therefore, the conductive layer may not be fully protected due to exposure to the external environment through these defects.

Patent Document 2 does not refer to a conductive polyaniline soluble in an organic solvent. A composition of such a polymer is disclosed in Patent Document 3. Patent Document 3 discloses a conductive polyaniline composition dissolved in an organic solvent which is not miscible with water. However, Patent Document 3 does not teach nor suggest combination of such a polyaniline composition with a conductive substrate having an inorganic conductive layer.

Further, to produce a conductive multilayer stack in which an inorganic conductive layer represented by an ITO layer is patterned, steps of forming a pattern on the ITO layer using a resist material and etching and removing of the resist material have heretofore been required. The reason for the need for removing the resist material is as follows. Since the resist material is generally an insulator, the conductive multilayer stack cannot be used as a conductive material such as a conductive circuit insofar as the resist material is removed. As a result, the steps become complicated to deteriorate productivity and increase costs. In patterning using the resist material, complicated steps of masking an inorganic conductive layer and vacuum depositing the resist material have heretofore been required.

Patent Document 2 discloses a patterned conductor in a stack of a metal-based transparent conductive film and a conductive organic substance thereon. As mentioned above, if the conductive organic substance layer formed by stacking has defects, it is hard to say that a composite transparent conductive substrate which can be put into practical use has been realized.

Patent Document 1: JP-A-2004-126708
Patent Document 2: JP-A-2005-19056
Patent Document 3: WO 2005/052058

The invention has been made in view of the above-mentioned problems. An object of the invention is to provide a conductive multilayer stack in which a conductive layer is prevented from cracking or removal without impairing transparency or low surface resistivity.

### SUMMARY OF THE INVENTION

The inventors of the invention made extensive studies to solve the above-mentioned problems. As a result, the inventors have found that surface optical properties and physical properties (e.g. resistance of a conductive layer to cracking or removal) of a conductive multilayer stack can be improved without impairing transparency or low surface resistivity by forming, on a conductive layer formed of an inorganic oxide, a transparent, highly-conductive high-molecular-weight polymer compound layer as a protective film or a film for improving surface properties. Further, the inventors have also found that a patterned conductive multilayer stack can be produced by a simplified process, by pattern printing an inorganic conductive layer with a conductive high-molecular-weight polymer substance which is soluble in an organic solvent, followed by etching to form a pattern. The invention has been made based on these findings.
The invention provides the following conductive multilayer stack.
1. A conductive multilayer stack comprising:
   a conductive substrate having an inorganic conductive layer; and
   a conductive high-molecular-weight polymer compound layer provided on the inorganic conductive layer.
2. The conductive multilayer stack according to 1, wherein the conductive high-molecular-weight polymer compound layer is a layer obtained by forming a conductive polyaniline composition into a film;
   the conductive polyaniline composition comprising: a protonated substituted or unsubstituted polyaniline composite (a) and a compound (b) containing a phenolic hydroxyl group, dissolved in an organic solvent.
3. The conductive multilayer stack according to 2, wherein the polyaniline composition contains a binder resin and/or a curable resin monomer.
4. The conductive multilayer stack according to any one of 1 to 3, wherein the inorganic conductive layer and the conductive high-molecular-weight compound layer are patterned to have a similar shape.

The conductive multilayer stack of the invention has a high degree of transparency and a low surface resistivity, and can suppress cracking or removal of the conductive layer.

### BRIEF DESCRIPTION OF THE DRAWINGS

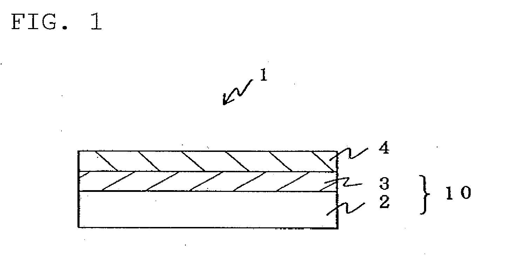

FIG. 1 is a schematic cross-sectional view of a conductive multilayer stack according to one embodiment of the invention.

### BEST MODE FOR CARRYING OUT THE INVENTION

The conductive multilayer stack of the invention will be described below in detail.
FIG. 1 is a schematic cross-sectional view of a conductive multilayer stack according to one embodiment of the invention.
A conductive multilayer stack 1 comprises a conductive substrate 10 formed of a substrate 2 and a conductive layer 3 and a conductive high-molecular-weight-compound layer 4 formed on the conductive layer 3.

As for the substrate, glass, silicon, or a sheet or film of a resin such as polyester, nylon, polysulfone, polycarbonate, triacetyl cellulose, polypropylene, polyethylene, polystylene and a cyclic olefin polymer can be used.
As for the conductor constituting the conductive layer, an inorganic oxide such as ITO, IZO, zinc oxide, tin oxide and titanium oxide and a metal such as copper, aluminum, iron, platinum, gold and lead can be used.

As for the method for forming a conductive layer on the substrate, known techniques such as sputtering, vacuum deposition and ion plating can be used without restrictions.
A commercial product in which a conductive layer is formed on the substrate may also be used.
The thicknesses of the substrate and the conductive layer may be adjusted appropriately depending on the application. Generally, the thickness of the substrate is 1 µm to 1 cm, and the thickness of the conductive layer is 1 nm to 10 µm. If the thickness of the conductive layer is less than 1 nm, conductivity may be insufficient. If the thickness of the conductive layer exceeds 10 µm, the conductive layer may have a deep color, and hence, may not be suitable for use in applications where transparency is required.
In order to improve adhesiveness between the substrate and the conductive layer, the substrate may be subjected to treatment such as heat treatment, corona treatment, plasma treatment and UV-ozone treatment. It is also possible to form an adhesive layer (primer layer).

In the invention, the conductive high-molecular-weight polymer compound layer is formed on the above-mentioned conductive layer.
As for the conductive high-molecular-weight polymer compound, polyacetylenes, polyphenylenes, polyphenylenevinylenes, polythiophenes, polypyrrols, polyanilines or the like that are soluble in a solvent or water, can be used. By using the conductive high-molecular-weight polymer compound soluble in a solvent or water, it is possible to form a dense film having a smooth surface which contributes to improved transparency, low surface resistivity and suppression of cracking or removal of the conductive layer.

In the invention, a conductive high-molecular-weight polymer compound layer which is obtained by forming into a film a conductive polyaniline composition, which contains a protonated substituted or unsubstituted polyaniline composite (a) and a compound (b) containing a phenolic hydroxyl group dissolved in an organic solvent, is preferable. The conductive high-molecular-weight polymer compound layer obtained by forming this composition into a film can suppress deterioration of performance of the conductive multilayer stack due to its high degree of transparency and conductivity. Further, the surface properties of the conductive layer can be improved by forming the conductive high-molecular-weight polymer compound layer on the surface of the conductive layer. As a result, interfacial refractive index can be lowered, surface reflectance can be lowered and accuracy of view field position can be improved. In addition, this conductive high-molecular-weight compound layer is dense, and therefore, can effectively protect the conductive layer.
The conductive polyaniline composition will be described below.

The conductive polyaniline composition may preferably be produced by the steps of:
(i) subjecting a substituted or unsubstituted aniline to chemical oxidation polymerization in the presence of an organic protonic acid or a salt thereof represented by the following formula (I), thereby to obtain a protonated substituted or unsubstituted polyaniline composition (a) which is soluble in an organic solvent;

   M(XARₙ)ₘ (I)

   wherein M is a hydrogen atom, or an organic or inorganic free group; X is an acidic group; A is a hydrocarbon group which may contain a substituent; Rs are independently -R¹, -OR¹, -COR¹, -COOR¹, -CO(COR¹), or -CO(COOR¹) [wherein R¹ is a hydrocarbon group with 4 or more carbon atoms which may have a substituent, a silyl group, an alkylsilyl group, - (R²O)ₓ-R³, or -(OSiR³₂)ₓ-OR³ (wherein R² is an alkylene group, R³s, which may be the same or different, are a hydrocarbon group, and x is an integer of 1 or more)]; n is an integer of 2 or more; and m is a valence of M; and
(ii) adding a compound (b) containing a phenolic hydroxyl group to the protonated substituted or unsubstituted polyaniline composite (a) dissolved in an organic solvent which is substantially immiscible with water. The above-mentioned method is preferable since a highly conductive composition improved in solubility can be obtained.

Although there are no particular restrictions on the compound (b) containing a phenolic hydroxyl group (hereinafter referred to as phenolic compound (b)) used in the composition, the compound is generally a compound represented by a general formula ArOH (wherein Ar is an aryl group or a substituted aryl group). Specific examples include phenol; substituted phenols such as o-, m-, or p-cresol, o-, m-, or p-ethylphenol, o-, m-, or p-propylphenol, o-, m-, or p-butylphenol, o-, m-, or p-chlorophenol, salicylic acid, hydroxybenzoic acid, and hydroxynaphthalene; polyphenolic compounds such as catechol and resorcinol; and high-molecular-weight polymer compounds such as phenol resins, polyphenol, and poly(hydroxystyrene).

In the composition, the phenolic compound (b) is present not as a solvent but as a dopant. As a result, a high degree of conductivity is realized.

The amount of the phenolic compound (b) in the composition is normally 0.01 to 1000 mass%, preferably 0.5 to 500 mass%, relative to the protonated substituted or unsubstituted polyaniline composite (a). A particularly improved conductivity can be obtained by this amount range.
In the entire composition, it is preferred that the molar concentration of the compound (b) containing a phenolic hydroxy group be in the range of 0.01 mol/l to 5 mol/l. If the amount of this compound is too small, an effect of improving electrical conductivity may not be obtained. An excessive amount may impair homogeneity of the composition and require a large amount of heat and labor such as working hours for the removal of volatile components, possibly resulting in formation of a material with poor transparency and electric characteristics.

As for the protonated substituted or unsubstituted polyaniline composite (a) (hereinafter referred to as polyaniline composite (a)) used in the composition may preferably be a composite obtained by protonating a substituted or unsubstituted polyaniline (hereinafter simply referred to as polyaniline) in the presence of an organic protonic acid represented by the following formula (I) or a salt thereof (hereinafter referred to as organic protonic acid (I) or a salt thereof) is preferable in respect of conductivity and solubility.

M(XARₙ)ₘ (I)

Examples of the substituent for the substituted polyaniline include a linear or branched hydrocarbon group such as methyl, ethyl, hexyl, and octyl, an alkoxyl group such as methoxy and ethoxy, an aryloxy group, and a halogen-containing hydrocarbon group such as CF₃.

The substituted or unsubstituted polyaniline may preferably be a high-molecular-weight polymer compound having an weight-average molecular weight of 10,000 g/mol or more. Due to such a molecular weight, the strength or drawability of the conductive high-molecular-weight polymer compound layer formed from the composition can be improved. There are no upper limits on the weight-average molecular weight, and polyaniline having a weight-average molecular weight of about several millions grams/mol can also be produced. In respect of solubility, the weight-average molecular weight is preferably about 10,000,000 or less.
The molecular weight of polyaniline is obtained by gel permeation chromatography (GPC).

In the above formula (I), M is a hydrogen atom, or an organic or inorganic free group. As examples of the organic free group, a pyridinium group, an imidazolium group, and an anilinium group can be given. As examples of the inorganic free group, sodium, lithium, potassium, cerium, and ammonium can be given.
X is an acidic group, for example, an -SO₃⁻ group, a -PO₃²⁻ group, a -PO₄(OH)⁻ group, an -OPO₃²⁻ group, an - OPO₂(OH)⁻ group, and a -COO⁻ group, with an -SO₃⁻ group being preferable since doping can be readily performed due to its high acidic value.

A is a hydrocarbon group which may contain a substituent. Examples thereof include linear or branched alkyl groups or alkenyl groups having 1 to 24 carbon atoms; cycloalkyl groups which may contain a substituent such as cyclopentyl, cyclohexyl, cycloheptyl, cyclooctyl and menthyl; dicycloalkyl groups or polycycloalkyl groups which may be condensed such as bicyclohexyl, norbornyl and adamantyl; aryl groups including an aromatic ring which may contain a substituent such as phenyl, tosyl, thiophenyl, pyrrolinyl, pyridinyl, and furanyl; diaryl groups or polyaryl groups which may be condensed such as naphthyl, anthracenyl, fluorenyl, 1,2,3,4-tetrahydronaphthyl, indanyl, quinolinyl, and indonyl; and alkylaryl groups.

Rs are independently -R¹, -OR¹, -COR¹,-COOR¹, -CO(COR¹), or -CO(COOR¹). Here, R¹ is a hydrocarbon group having 4 or more carbon atoms which may contain a substituent, a silyl group, an alkylsilyl group, -(R²O)ₓ-R³, or -(OSiR³₂)ₓ-OR³ (wherein R² is an alkylene group, R³s, which may be the same or different, are a hydrocarbon group, and x is an integer of 1 or more). When R¹ is a hydrocarbon group, examples of R¹ include a linear or branched butyl group, a pentyl group, a hexyl group, a heptyl group, an octyl group, a nonyl group, a decyl group, a dodecyl, a pentadecyl group, and an eicosanyl group.
n is an integer of 2 or more and m is a valence of M.

As the compound shown by the formula (I), a dialkylbenzenesulfonic acid, dialkylnaphthalenesulfonic acid, sulfophthalate, and a compound shown by the following formula (II) can be preferably used in respect of easy doping.

M(XCR⁴(CR⁵₂COOR⁶)COOR⁷)ₚ (II)

As in the case of formula (I), M in the above formula (II) is a hydrogen atom, or an organic or inorganic free group. As examples of the organic free group, a pyridinium group, an imidazolium group, and an anilinium group can be given. As examples of the inorganic free group, sodium, lithium, potassium, cerium, ammonium, or the like can be given.

X is an acidic group. Examples include an -SO₃⁻ group, a -PO₃²⁻ group, a -PO₄(OH)⁻ group, an -OPO₃²⁻ group, an - OPO₂(OH)⁻ group, and a -COO⁻ group can be given. Of these, an -SO₃⁻ group is preferable.

R⁴ and R⁵ are independently a hydrogen atom, a hydrocarbon group, or R⁸₃Si- (wherein R⁸ is a hydrocarbon group, and three R⁸s may be the same or different). When R⁴ and R⁵ are hydrocarbon groups, examples of the hydrocarbon groups include a linear or branched alkyl group having 1 to 24 carbon atoms, an aryl group including an aromatic ring, or an alkylaryl group. Of these, a hydrocarbon group having 4 or more carbon atoms is preferable in order to obtain a polyaniline composite which is readily solved in an organic solvent. When R⁸ is a hydrocarbon group, examples of the hydrocarbon group include the same groups as mentioned for R⁴ and R⁵.

R⁶ and R⁷ are independently a hydrocarbon group or - (R⁹O)_{q}-R¹⁰ [wherein R⁹ is a hydrocarbon group or silylene group, R¹⁰ is a hydrogen atom, a hydrocarbon group, or R¹¹₃Si- (wherein R¹¹ is a hydrocarbon group and three R¹¹s may be the same or different), and q is an integer of 1 or more]. When R⁶ and R⁷ are hydrocarbon groups, examples of the hydrocarbon groups include a linear or branched alkyl group having 1 to 24 carbon atoms, preferably 4 or more carbon atoms, an aryl group including an aromatic ring, or an alkylaryl group. When R⁶ and R⁷ are hydrocarbon groups, specific examples of the hydrocarbon groups include a linear or branched butyl group, a pentyl group, a hexyl group, an octyl group, and a decyl group.

In R⁶ and R⁷, when R⁹ is a hydrocarbon group, examples of the hydrocarbon group include a linear or branched alkylene group having 1 to 24 carbon atoms, an arylene group including an aromatic ring, an alkylarylene group, or an arylalkylene group. In R⁶ and R⁷, when R¹⁰ and R¹¹ are hydrocarbon groups, examples of the hydrocarbon groups include the same groups as mentioned for R⁴ and R⁵ can be given. q is preferably 1, to 10.

When R⁶ and R⁷ are groups represented by -(R⁹O)_{q}-R¹⁰, groups shown by the following formulas can be given as specific examples: 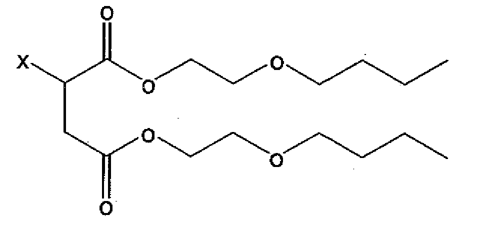 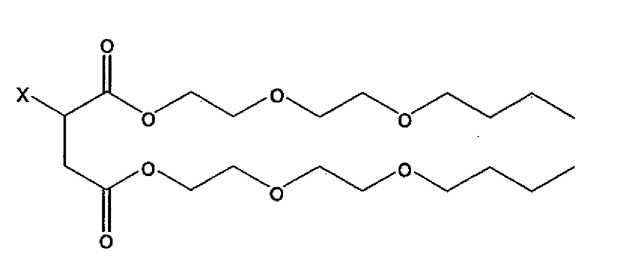 wherein X represents -SO₃ and the like.

p is a valence of M.

In respect of conductivity and solubility, it is further preferred that the above organic protonic acid (II) or a salt thereof be a sulfosuccinic acid derivative represented by the following formula (III) (hereinafter referred to as sulfosuccinic acid derivative (III)).

M(O₃SCH(CH₂COOR¹²)COOR¹³)ₘ (III)

In the above formula (III), M and m are the same as in the above formula (I).

R¹² and R¹³ are independently a hydrocarbon group or - (R¹⁴O)ᵣ-R¹⁵ [wherein R¹⁴ is a hydrocarbon group or a silylene group, R¹⁵ is a hydrogen atom, a hydrocarbon group, or R¹⁶₃Si- (wherein R¹⁶ is a hydrocarbon group, and three R¹⁶s may be the same or different), and r is an integer of 1 or more].

When R¹² and R¹³ are hydrocarbon groups, examples of the hydrocarbon groups include the same groups as mentioned for R⁶ and R⁷.

In R¹² and R¹³, when R¹⁴ is a hydrocarbon group, the same groups as mentioned for R⁹ can be given as the hydrocarbon group. In R¹² and R¹³, when R¹⁵ and R¹⁶ are hydrocarbon groups, the same groups as mentioned for R⁴ and R⁵ can be given as the hydrocarbon groups.

r is preferably 1 to 10.

When R¹² and R¹³ are groups represented by -(R¹⁴O)ᵣ-R¹⁵, examples thereof include the same groups as mentioned for - (R⁹O)_{q}-R¹⁰ in R⁶ and R⁷.

When R¹² and R¹³ are hydrocarbon groups, examples of the hydrocarbon groups include the same groups as mentioned for R⁶ and R⁷. Of these, a butyl group, a hexyl group, a 2-ethylhexyl group, a decyl group, or the like is preferable since a polyaniline composite which can be dissolved readily in an organic solvent can be obtained.

The above-mentioned organic protonic acid (I) or a salt thereof has a function of protonating polyaniline and is present as a dopant (counteranion) in the polyaniline composite (a). Specifically, two compounds, that is, the organic protonic acid (I) or a salt thereof and the phenolic compound (b), function as dopants in the composition. The above-mentioned organic protonic acid (I) or a salt thereof appears to be present as a cation in the composition.

Although there are no particular restrictions on the amount ratio of the polyaniline and organic protonic acid (I) or a salt thereof in the polyaniline composite (a), the molar ratio of a polyaniline monomer unit to the organic protonic acid (I) or a salt thereof is usually 0.1 to 2, and preferably 0.1 to 0.7. If the amount ratio of the organic protonic acid (I) or a salt thereof is too small, the electrical conductivity does not increase. The electrical conductivity also decreases when the amount ratio thereof is too large due to a decrease in the amount ratio of polyaniline which governs the electric characteristics of molded articles. Although the weight composition ratio changes according to the molecular weight of the protonic acid, a protonated substituted or unsubstituted polyaniline composite (a) containing substituted or unsubstituted polyaniline in an amount of 20 to 70 wt% is preferable since molded articles exhibit excellent electric characteristics.

The organic protonic acid (I) or a salt thereof used in the invention can be produced by a known method. For example, a sulfophthalate derivative or sulfosuccinate derivative can be obtained by allowing a corresponding sulfophthalic acid derivative or sulfosuccinic acid derivative to react with a desired alcohol. In addition, hydrosulfonylating a maleate with sodium hydrogensulfite or the like to produce a corresponding sulfosuccinate derivative is also known.

A commercially available product of organic protonic acid (I) or a salt thereof can also be used. As examples of the commercially available product, Aerosol OT (diisooctyl sodium sulfosuccinate, manufactured by Wako Pure Chemical Industries, Ltd.) and Liparl 870P (manufactured by Lion Corp.) can be given. Although some commercially available products have different purities, appropriate products may be selected as required.

The organic solvent used in the composition is substantially immiscible with water (hereinafter referred to as water immiscible organic solvent). As examples of the water immiscible organic solvent, hydrocarbon solvents such as benzene, toluene, xylene, ethylbenzene, and tetralin; halogen-containing solvents such as methylene chloride, chloroform, carbon tetrachloride, dichloroethane, trichloroethane, and tetrachloroethane; ester solvents such as ethyl acetate; and the like can be given. Of these, toluene, xylene, chloroform, trichloroethane, ethyl acetate, or the like are preferable in respect of excellent solubility.

The polyaniline composite (a) used in the invention is preferably produced by chemical oxidation polymerization.

As a solvent used in the chemical oxidation polymerization, an acidic aqueous solution or a mixed solvent of a hydrophilic organic solvent and an acidic aqueous solution is generally used. In the production of the polyaniline composite (a), an organic solvent which is substantially immiscible with water (water immiscible organic solvent) or a mixed solvent of a water immiscible organic solvent and an acidic aqueous solution can also be used. Use of such a mixed solvent is preferable since collection of the polyaniline composite can be facilitated, as explained later. The acidic aqueous solution is prepared by adding hydrochloric acid or the like to water, for example. As the water immiscible organic solvent, hydrocarbon solvents such as benzene, toluene, xylene, ethylbenzene, and tetralin; halogen-containing solvents such as methylene chloride, chloroform, carbon tetrachloride, dichloroethane, trichloroethane, and tetrachloroethane; ester solvents such as ethyl acetate; and the like can be given. Of these, toluene, xylene, or the like are preferable since they exhibit excellent solubility for polyaniline.

When the mixed solvent of a water immiscible organic solvent and an acidic aqueous solution is used, the polyaniline composite (a) produced by the polymerization reaction is obtained in the state of being dissolved in the water immiscible organic solvent phase if the organic protonic acid (I) or a salt thereof is present in the mixed solvent during the polymerization of aniline. The polyaniline composite (a) dissolved in the water immiscible organic solvent can be promptly obtained by separating the water phase.

When the polyaniline composite (a) is produced using the mixed solvent of a water immiscible organic solvent and an acidic aqueous solution in the presence of the organic protonic acid (I) or a salt thereof, the organic protonic acid (I) or a salt thereof also functions as a surfactant.

The molar ratio of the organic protonic acid (I) or a salt thereof to the aniline or substituted aniline to be polymerized is usually 0.05 to 1, and preferably 0.1 to 0.5. If the molar ratio of the organic protonic acid (I) or a salt thereof is smaller than 0.05, the polymerization reaction proceeds slowly, and hence, a molded article with high electrical conductivity cannot be obtained. If the molar ratio is larger than 1, it is difficult to separate a water phase after polymerization. As a result, a conductive high-molecular-weight polymer compound layer with a high electrical conductivity may not be obtained.

Although there are no particular restrictions on the chemical oxidization initiator, inorganic compounds including peroxide salts such as ammonium persulfate, sodium persulfate, and potassium persulfate; ammonium dichromate, ammonium perchlorate, iron (III) potassium sulfate, iron (III) trichloride, manganese dioxide, iodic acid, potassium permanganate, and the like can be used. Compounds that oxidize at room temperature or below are preferable. When a mixed solvent of a water immiscible organic solvent and an acidic aqueous solution is used, it is preferable to use a water-soluble initiator in order to prevent an unreacted initiator from mixing in an organic phase. Specific examples of the preferable initiator include ammonium persulfate, sodium persulfate, potassium persulfate, and ammonium perchlorate, with ammonium persulfate being particularly preferable. Polymerization at a temperature exceeding 30°C is not preferable since an undesirable side reaction may occur.

Although the polymerization reaction conditions are not specifically limited, the reaction temperature is usually from -20°C to 30°C, and preferably 5°C or less. Polymerization at a temperature exceeding 30°C is not preferable since an undesirable side reaction may proceed.

When the polyaniline composite (a) is produced by chemical oxidation polymerization in a water-immiscible organic solvent, the phenolic compound (b) may be added to the polyaniline composite (a) being in the state dissolved in the water immiscible organic solvent used in the polymerization. It is also possible to add the phenolic composite (a) after removing the organic solvent from the solution in which the polyaniline composite (a) is dissolved in the organic solvent, thereby to obtain a solid polyaniline composite (a), and again dissolving it in a water immiscible organic solvent. In this case, the water immiscible organic solvent used for the polymerization and the water immiscible organic solvent used for dissolving the solid polyaniline composite (a) again may be either the same or different.

The polyaniline composite (a) used in the invention can also be produced by chemical oxidation polymerization in an acidic aqueous solution without using the mixed solvent of a water immiscible organic solvent and an acidic aqueous solution. Such a method is widely known. In this method, the polyaniline or polyaniline composite is obtained as precipitates from the aqueous solution. The precipitated product contains a large amount of impurities such as unreacted aniline monomers and oligomers, initiators, or the like. For this reason, the precipitated polyaniline or polyaniline composite must be purified into the state of an emeraldine base by reduction using a base such as ammonia or hydrazine.

A common electrolytic polymerization method can be used for producing the polyaniline composite (a) instead of the chemical oxidation polymerization.

The amount of the polyaniline composite (a) in the water immiscible organic solvent in the composition of the invention is usually 900 g/l or less, preferably 0.01 to 300 g/l or less, depending on the type of the water immiscible organic solvent. If the amount of polyaniline composite (a) is too large, the composition cannot be maintained as a solution, resulting in difficult handling during formation of the conductive high-molecular-weight polymer compound layer, impaired homogeneity of the conductive high-molecular-weight compound layer, and a decrease in electric characteristics, mechanical strength, and transparency of the conductive high-molecular-weight compound layer. If the amount of the polyaniline composite is too small, only a very thin film can be obtained when film formation is performed by a method explained later. As a result, it may be difficult to produce a homogeneous conductive film.

In order to obtain the composition (conductive polyaniline composition) comprising a polyaniline composite (a) dissolved in a water immiscible organic solvent and phenolic compound (b), the phenolic compound (b) is added to the polyaniline composite (a) obtained in the state of being dissolved in the water immiscible organic solvent, which is obtained in the manner as mentioned above. Specifically, the phenolic compound (b) may be added in a solid state, in a liquid state, or in the state of being dissolved or suspended in a water immiscible or water miscible organic solvent. Preferably, an appropriate solvent addition method is selected so that the state of being dissolved in the solvent is maintained after the addition.

Other resin materials and other additives such as inorganic materials, curing agents and plasticizers may be added to the composition according to the application.

Other resin materials are added as a binder material, a plasticizer, a matrix material, or the like. As examples, binder resins and/or curable resin monomers can be given. Specific examples of the binder resin include polyethylene, polypropylene, polystyrene, polyethylene terephthalate, polycarbonate, polyethylene glycol, polyethylene oxide, polyacrylic acid, polyacrylate, polymethacrylate, and polyvinyl alcohol. Specific examples of curable resin monomers include acrylic acid, and acrylic esters such as methyl acrylate, ethyl acrylate, butyl acrylate, and hexyl acrylate, epoxies, phenols, and imides. When other resin materials are contained, the composition becomes a conductive composite material. Curable resin monomers can be cured by heating or irradiating with UV rays or an electron beam.

The inorganic material is added to improve, for example, strength, surface hardness, dimensional stability, and other mechanical characteristics. Specific examples thereof include silica (silicon dioxide), titania (titanium oxide), and alumina (aluminum oxide).

The curing agent is added to improve, for example, strength, surface hardness, dimensional stability, and other mechanical characteristics. Specific examples thereof include heat-curing agents such as a phenol resin, and photo-curing agents comprising an acrylate monomer and a photopolymerization initiator.

The plasticizer is added to improve, for example, mechanical characteristics such as tensile strength and bending strength. Specific examples thereof include phthalates and phosphates.
As for the method for producing the polyaniline composite used in the invention and other information, reference can be made to WO/2005/052058.

The conductive high-molecular-weight polymer compound layer of the invention can be produced by applying a solution which contains the above-mentioned conductive-high-molecular-weight compound or the above-mentioned liquid composition to the conductive layer, followed by removal of the solvent.
The organic solvent can be removed by vaporizing it by heating. As the method for vaporizing the solvent, for example, the conductive layer is heated in an air stream of 250°C or less, preferably at 50 to 200°C. If necessary, heating may be performed under reduced pressure. Heating temperature and heating time are not specifically limited and can be appropriately determined according to the material used.

As for the method for applying a solution containing the above-mentioned conductive-high-molecular-weight polymer compound or the above-mentioned liquid composition to a conductive layer, commonly known methods such as casting, spraying, dip coating, doctor blading, bar coating, spin coating, screen printing, and gravure printing can be used.
The thickness of the conductive layer may preferably be 1 nm to 10 µm, with 10 nm to 1 µm being particularly preferable. In this thickness range, a low surface resistivity and excellent optical and physical properties can be obtained without impairing high conductivity, high transparency, or other preferable properties of the inorganic conductive layer.

When applying the above-mentioned solution or the liquid composition to the conductive layer, a patterned conductive high-molecular-weight polymer compound layer is formed by applying such a solution or a liquid in a desired pattern, followed by drying. The conductive layer can be patterned by etching with an acid or the like while protecting the conductive layer by the patterned conductive high-molecular-weight polymer compound layer. Part of the conductive layer to which the composition is applied remains whereby a circuit or the like can be formed. In addition, the high-molecular-weight compound layer can be used as it is without being peeled off since it has conductivity unlike conventional resist materials. As mentioned above, since the conductive high-molecular-weight compound layer can be used as a resist material and the conductive multilayer stack can be used as a conductive circuit or the like without the step of peeling off the conductive layer, production steps can be simplified.
Since the conductive polyaniline composition or the like used in the conductive multilayer stack of the invention is soluble in a solvent (that is, it can be applied to the conductive layer), a pattern can be formed by simple pattern printing or the like. In addition, since the high-molecular-weight polymer compound layer has both conductivity and etching resistance, the layer can be used as a resist material as it is without the step of peeling off.

The multilayer stack of the invention has a transmittance to entire rays of preferably 70% or more, more preferably 84% or more. The entire rays means rays with a wavelength of 350 to 800 nm. It is preferred that the multilayer stack of the invention have the transmittance to rays with a wavelength of 450 nm of 70% or more.

### EXAMPLES

The invention will be described in more detail according to the following examples.

### Production Example

### (1) Preparation of conductive polyaniline composite

144 g of Aerosol OT (sodium diisooctylsulfosuccinate, manufactured by Wako Pure Chemical Industries, Ltd., purity of 75% or more) was dissolved in 4 1 of toluene with stirring. The resulting solution was poured into a 30 1 glass reactor (equipped with a mechanical stirrer, a jacket, a thermometer, and a dropping funnel) under a nitrogen stream, and 150 g of aniline as a raw material was added and dissolved with stirring.
The flask was cooled with stirring using a coolant, and 12 1 of a 1 N hydrochloric acid aqueous solution was added to the solution.
When the solution temperature was lowered to -3°C, a solution obtained by dissolving 214 g of ammonium persulfate in 4 1 of 1 N hydrochloric acid solution was added dropwise from the dropping funnel. The dropwise addition was completed within 3 hours and 10 minutes. Stirring was performed while keeping the internal temperature of the solution at 0°C ± 1°C for 18 hour and 30 minutes after the start of dropwise addition. Then, 8 1 of toluene was added, and after raising the temperature to 19°C, the solution was allowed to stand.
After being allowed to stand, the solution was separated into two phases. The aqueous phase (lower phase) was removed from the lower part of the reactor, whereby a toluene solution of a crude polyaniline composite was obtained.
4 1 of ion exchange water was added to the resulting composite solution, stirred, and allowed to stand to separate the aqueous phase. After conducting this operation again, the composite solution was then washed with 4 1 of a 1 N hydrochloric aqueous solution, and allowed to stand. Thereafter, the acidic aqueous solution was separated to collect a toluene solution of the polyaniline composite.
A small amount of insoluble matters contained in the composite solution were removed by No. 5C filter paper, whereby a toluene solution of the toluene-soluble polyaniline composite was collected. This solution was transferred to an evaporator, heated in a hot water bath of 60°C under reduced pressure to distill volatile components off by evaporation, thereby to obtain 208 g of a polyaniline composite.

The results of the elementary analysis of the polyaniline composite from which the volatile components were substantially removed are shown below.
Carbon: 61.70 wt%, Hydrogen: 8.20 wt%, Nitrogen: 3.90 wt%, Sulfur: 5.50 wt%, Chlorine: 0.12 wt%
From the ratio of the weight percentage of nitrogen based on the raw material aniline and the weight percentage of sulfur based on the sulfosuccinate, the aniline monomer unit/the sulfosuccinate molar fraction in this composite was 0.62.

### (2) Preparation of conductive polyaniline composition

1 g of the polyaniline composite obtained in (1) above was again dissolved in 18 ml of toluene to prepare a homogeneous solution of the conductive polyaniline composite solution. Then, 2 ml of m-cresol was added to obtain a conductive polyaniline composition.

### Example 1

99 ml of toluene was added to 1 ml of the conductive polyaniline composition obtained in the Production Example to prepare a conductive polyaniline composition at a concentration of 0.5 g/l. About 2 ml of the resultant composition was applied to the surface of an ITO layer of a conductive substrate (an ITO/polyethylene terephthalate film (A5 size, 125 µm in thickness, KB300N-125, manufactured by Oike & Co., Ltd.), followed by bar coating using a No. 0 bar. Drying was performed for 60 seconds in an air stream of 75°C, whereby a conductive multilayer stack was obtained. In the conductive substrate, the ITO layer was formed such that the surface resistivity became 280 Ω/□. The TEM (transmission electron microscope) observation of the resulting conductive multilayer stack revealed that the conductive polyaniline composition layer had a thickness of 0.1 µm.
The conductive multilayer stack had a transmittance to entire rays of 87.3% (the substrate itself had a transmittance to entire rays of 87.6%), and an intrinsic surface resistivity of 310 Ω/□ (the substrate itself had a surface resistivity of 280 Ω/□). That is, the conductive multilayer stack had a transmittance to entire rays and an intrinsic surface resistivity almost similar to those of the substrate. The glossiness of the multilayer stack was 179% (the glossiness of the substrate was 183%). The results showed that the surface glossiness was suppressed to improve the visibility of a display surface.
The methods of evaluation are described below.

### (1) Method for measuring transmittance to entire rays

The transmittance to entire rays was measured according to JIS K7105 using a haze meter having a tungsten lamp 7027 as a light source (manufactured by Nippon Denshoku Industries Co., Ltd., Model: NDH (optical part), 300A (measuring part)).

### (2) Method for measuring intrinsic surface resistivity

Intrinsic surface resistivity was measured by the five-point measuring method according to JIS K 7194 using Loresta GP (resistivity meter using the four probe method, manufactured by Mitsubishi Chemical Corp.).

### (3) Method for measuring glossiness

Glossiness was measured according to JIS Z 8741 using a gloss meter GM-60 (manufactured by Konica Minolta Sensing, Inc.). The measurement angle was 60°.

### Example 2

12.5 mg of Lackskin (polyacrylic acid ester-based binder manufactured by Seiko Chemicals Co., Ltd.) was added to 7.5 ml of the conductive polyaniline composition obtained in Production Example (conductive polyaniline: 37.5 mg), and toluene was added to make the total amount 50 ml, whereby a conductive polyaniline composition was obtained at a concentration of 10 g/l (the weight ratio of the conductive polyaniline to Lackskin was 75/25).
About 2 ml of this composition was applied to the surface of an ITO layer of a conductive substrate (an ITO/polyethylene terephthalate film, A5 size, 125 µm in thickness, KB300N-125 manufactured by Oike & Co., Ltd.), followed by bar coating using a No. 0 bar. Drying was performed for 60 seconds in an air stream of 75°C, whereby a conductive multilayer stack was obtained. In Example 2, in order to improve adhesiveness of the ITO layer and the conductive polyaniline composition layer, as well as to improve the mechanical strength of the conductive polyaniline composition layer, a polyacrylic ester-based binder was added. A TEM (transmission electron microscope) observation of the cross section of the resulting conductive multilayer stack revealed that the conductive polyaniline composition layer had a thickness of 0.1 µm.
The conductive multilayer stack had a transmittance to entire rays of 84.4% (the substrate itself had a transmittance to entire rays of 87.6%), and an intrinsic surface resistivity of 470 Ω/□ (the substrate itself had a surface resistivity of 280 Ω/□). That is, the conductive multilayer stack had a transmittance to entire rays and an intrinsic surface resistivity almost similar to those of the substrate. The glossiness of the multilayer stack was 180% (the glossiness of the substrate was 183%). The results showed that the surface glossiness was suppressed to improve the visibility of a display surface.

### Example 3

15 ml of toluene was added to 10 ml of the conductive polyaniline composition obtained in Production Example to prepare a conductive polyaniline composition at a concentration of 2 g/100 ml. An ITO/polyethylene terephalate film (KB300N-125, manufactured by Oike & Co., Ltd.) was cut into a fragment of 3 cm x 3 cm. Further, half of the ITO surface was covered by a commercially available adhesive tape. This film fragment was immersed in the above-mentioned polyaniline composition solution, and the polyaniline composition solution was applied to the film surface. After drying at room temperature for one hour, further for one minute at 80°C, the adhesive tape was peeled off, whereby an ITO/polyethylene terephthalate film patterned with the conductive polyaniline composition was obtained. A TEM (transmission electron microscope) observation of the cross section of this patterned film revealed that the conductive polyaniline composition layer had a thickness of 0.15 µm.
The film as obtained above was immersed in a 1 N hydrochloric aqueous solution at room temperature for 30 seconds, whereby the surface of the ITO layer was etched.

Subsequently, the intrinsic surface resistivity of part which was patterned with polyaniline and that of the part which was not patterned with polyaniline were measured by the five-point measuring method according to JIS K 7194 using Loresta GP (resistivity meter using the four probe method, manufactured by Mitsubishi Chemical Corp.). As a result, it was found that, while the part which was patterned with polyaniline had a resistivity of 460 Ω/□, the part which was not patterned with polyaniline became an insulator, and the resistivity thereof could not be measured.
The cross section of this film was observed by means of a transmission electron microscope (magnification: x 100,000). As a result, the polyaniline layer and the ITO layer were observed in a cross section of the part which was patterned with polyaniline.

The above facts show that the surface of the ITO layer can be patterned with polyaniline, the polyaniline layer can be used as a resist material for etching with an acid, and when patterning is performed with polyaniline, the polyaniline layer exhibits sufficient conductivity after etching with an acid, and hence, can be used for a conductive circuit or the like without being peeled off.

### INDUSTRIAL APPLICABILITY

The conductive multilayer stack of the invention can be used as a transparent electrode substrate of a touch panel, a liquid crystal display, an organic electroluminescent display, a solar cell, or the like.

## Claims

1. A conductive multilayer stack comprising:
a conductive substrate having an inorganic conductive layer; and
a conductive high-molecular-weight polymer compound layer provided on the inorganic conductive layer.

2. The conductive multilayer stack according to claim 1, wherein the conductive high-molecular-weight polymer compound layer is a layer obtained by forming a conductive polyaniline composition into a film;
the conductive polyaniline composition comprising: a protonated substituted or unsubstituted polyaniline composite (a) and a compound (b) containing a phenolic hydroxyl group, dissolved in an organic solvent.

3. The conductive multilayer stack according to claim 2, wherein the polyaniline composition contains a binder resin and/or a curable resin monomer.

4. The conductive multilayer stack according to any one of claims 1 to 3, wherein the inorganic conductive layer and the conductive high-molecular-weight polymer compound layer are patterned to have a similar shape.
